Europäisches Patentamt

European Patent Office

Office européen des brevets

(19)

(11) Veröffentlichungsnummer : **0 179 079**
**B1**

(12) # EUROPÄISCHE PATENTSCHRIFT

(45) Veröffentlichungstag der Patentschrift :
30.08.89

(51) Int. Cl.⁴ : **B 23 Q   3/06**, B 25 B   5/00

(21) Anmeldenummer : 85901377.3

(22) Anmeldetag : 06.04.85

(86) Internationale Anmeldenummer :
PCT/DE 85/00102

(87) Internationale Veröffentlichungsnummer :
WO/8504611 (24.10.85 Gazette 85/23)

(54) SEITENDRUCKSTÜCK FÜR DIE WERKSTÜCK-POSITIONIERUNG.

(30) Priorität : 09.04.84 DE 3413298

(43) Veröffentlichungstag der Anmeldung :
30.04.86 Patentblatt 86/18

(45) Bekanntmachung des Hinweises auf die Patenterteilung : 30.08.89 Patentblatt 89/35

(84) Benannte Vertragsstaaten :
AT BE CH DE FR GB IT LI LU NL SE

(56) Entgegenhaltungen :
CH-A-   256 909
DE-A- 2 503 246
FR-A-   959 001
US-A- 3 565 418

(73) Patentinhaber : REIS, Dieter
Friedensstrasse 21
D-6236 Eschborn (DE)

(72) Erfinder : WÖBER, Ralf
Märkerstrasse 18
D-6000 Frankfurt 56 (DE)
Erfinder : REIS, Dieter
Friedensstrasse 21
D-6236 Eschborn (DE)
Erfinder : PETROCI, Stanko
Lübeckerstrasse 3
D-6236 Eschborn (DE)

(74) Vertreter : Schüler, Horst, Dr.
Kaiserstrasse 69
D-6000 Frankfurt/Main 1 (DE)

EP 0 179 079 B1

Jouve, 18, rue St-Denis, 75001 Paris, France

## Beschreibung

Die Erfindung betrifft ein Seitendruckstück zur elastischen lateralen Klemmung eines Werkstückes gegen einen oder mehrere an einer Unterlage vorhandene Anschläge bestehend aus einem an die Unterlagen anbringbaren Gehäuse und einen im Gehäuse befestigten und zwecks Anlage an dem Werkstück teilweise aus dem Gehäuse hinausragenden Haltestift, der in zwei lateralen Richtungen gegen elastische Mittel bewegbar ist.

Derartige Seitendruckstücke sind beispielsweise aus dem älteren deutschen Patent 2 503 246 bekannt. Bei diesen Seitendruckstücken ist der Haltestift in einem elastischen Material eingebettet und so federnd gehalten, d. h., wenn er durch Aufwendung einer entsprechend großen Kraft aus seiner Normalstellung gebracht wird, dann versucht er, in diese Normalstellung zurückzukehren.

Ein Werkstück, welches beispielsweise zwischen zwei Anschläge und dieses Seitendruckstück eingespannt wird, wird demzufolge von diesem Seitendruckstück mit einer Kraft gehalten, die einmal von der Elastizität des verwendeten elastischen Materials und zum anderen von dem Ausmaß der Auslenkung des Haltestiftes aus seiner Normalstellung durch das Werkstück abhängt.

Für kurzzeitige Befestigung von Werkstücken eignen sich diese Seitendruckstücke in ausgezeichneter Weise.

Bei langdauernder Verwendung ergeben sich indessen Nachteile, die auf einer bleibenden Verformung des elastomeren Materials beruhen.

Wird nämlich mit einem solchen bekannten Seitendruckstück ein Werkstück über einen längeren Zeitraum arretiert, dann tritt eine bleibende Verformung des elastomeren Materials ein mit der Folge, daß der Haltestift nach dem Lösen des Werkstückes nicht mehr vollständig in seine ursprüngliche Position zurückkehrt.

Diesen Nachteil zu beheben und ein Seitendruckstück der eingangs definierten Art zu schaffen, welches sich sowohl für die kurzzeitige als auch für die lang dauernde Befestigung von Werkstücken an einer Unterlage eignet, ist Aufgabe der vorliegenden Erfindung.

Gelöst wird diese Aufgabe mit einem Seitendruckstück zur elastischen lateralen Klemmung eines Werkstücks gegen einen oder mehrere an einer Unterlage vorhandene Anschläge bestehend aus einem an die Unterlage anbringbaren Gehäuse und einen im Gehäuse befestigten und zwecks Anlage an dem Werkstück teilweise aus dem Gehäuse hinausragenden Haltestift, der in zwei lateralen Richtungen gegen elastische Mittel bewegbar ist, das dadurch gekennzeichnet ist, daß der Haltestift mit einem an der Gehäusewand anliegenden Bund versehen ist und von einer im Gehäuse zwischen Gehäuseboden und Bund angeordneten Druckfeder mit seinem Bund gegen den nach innen abgewinkelten Gehäuserand gepreßt ist.

Bei einem solchermaßen gekennzeichneten erfindungsgemäßen Seitendruckstück ist der Haltestift in jeder Richtung aus seiner Normalstellung auslenkbar, und mit ihm wird der Bund gegen die Federkraft aus seiner Normalstellung bewegt. Daß heißt, die Federkraft versucht, den Bund in seine Normalstellung zurückzudrücken und damit gleichzeitig auch den Haltestift wieder in seine Normalstellung zu bringen.

Diese Rückstellkraft wird dabei von der Druckfeder erzeugt, die zwischen Gehäuseboden und Bund angeordnet ist. Je stärker die Federkraft dieser Druckfeder ist, um so größer ist die Rückstellkraft, mit der letztendlich der Haltestift in seine Normalstellung zurückkehren will.

Gegenüber dem eingangs beschriebenen bekannten Seitendruckstück zeichnet sich das erfindungsgemäße Seitendruckstück aufgrund der Verwendung einer üblichen Druckfeder durch eine wesentlich größere Unempfindlichkeit gegenüber Materialermüdung aus, es ist somit praktisch statisch und dynamisch unbegrenzt belastbar. Weiterhin läßt die Druckfeder größere Federwege zu als die bei den bekannten Seitendruckstücken verwendeten elastomeren Materialien, es können somit mit dem erfindungsgemäßen Seitendruckstück wesentlich größere Toleranzen bei den zu befestigenden Werkstücken ausgeglichen werden.

Darüber hinaus zeichnen sich die erfindungsgemäßen Seitendruckstücke durch eine größere Widerstandsfähigkeit gegenüber Wärmeeinwirkung und Chemikalien, insbesondere aller Arten von Lösungsmitteln, aus, und sie sind auch bei Verwendung von rostfreiem Federstahl für die Druckfeder gegenüber Korrosion nahezu unempfindlich.

Es hat sich als besonders vorteilhaft erwiesen, wenn bei dem erfindungsgemäßen Seitendruckstück der Bund des Haltestiftes mit einer teilkugelförmigen Außenfläche versehen ist. Eine solche Außenfläche gestattet bei einem zylinderförmigen Gehäuse ein Auslenken des Haltestiftes und gleichzeitig ein Verkippen des an der Gehäusewandung anliegenden Bundes, ohne daß der Bund seine Führung an der Gehäusewand verliert. Eine solche Ausführungsform zeichnet sich insbesondere durch eine sehr gleichmäßige Veränderung der Federkraft bei der Auslenkung des Haltestiftes aus seiner Normalstellung aus.

Der gleiche Zweck wird auch erreicht, wenn das Gehäuse im Bereich des Bundes teilhohlkugelförmig ausgebildet ist. Eine solche Ausführungsform ergibt bereits mit einem einfachen scheibenförmigen Bund eine gute Führung über den gesamten Auslenkungsbereich, andererseits ist eine solche Ausführungsform in Verbindung mit einer teilkugelförmigen Außenfläche des Bundes nahezu optimal für die Führung bei der Auslenkung des Haltestiftes.

Die Rückstellkraft des Haltestiftes kann, wie bereits erwähnt, dadurch variiert werden, daß eine unterschiedlich starke Feder in das erfindungsgemäße Seitendruckstück eingesetzt wird.

Das erfindungsgemäße Seitendruckstück kann somit mit unterschiedlichen Rückstellkräften geliefert werden.

Bei der praktischen Anwendung ergibt sich jedoch häufig die Notwendigkeit, die Rückstellkraft eines gerade vorhandenen Seitendruckstückes zu verändern. Dies läßt sich mit einer besonders vorteilhaften Ausführungsform der vorliegenden Erfindung dadurch bewirken, daß die Federkraft der Druckfeder mittels eines Stellgliedes veränderbar ausgebildet ist. Eine solche Veränderung der Federkraft der Druckfeder kann somit mittels einer im Gehäuseboden angeordneten, mit einem Anschlag für die Druckfeder versehenen Stellschraube bewirkt werden, die gegebenenfalls mit einer Kontermutter oder auf andere bekannte Weise arretiert wird.

Mit einer solchen Stellschraube läßt sich die Federkraft der Druckfeder in dem Gehäuse innerhalb eines großen Bereiches variieren und damit auch die Rückstellkraft des Haltestiftes.

Mittels geeigneter Markierungen an der Stellschraube einerseits und dem Gehäuse des Seitendruckstücks andererseits lassen sich so definierte Federkräfte der Druckfeder und damit definierte Rückstellkräfte für den Haltestift einstellen.

Der Haltestifft kann zwar eine beliebige Form aufweisen, es hat sich indessen als zweckmäßig erwiesen, wenn er als Zylinderstift ausgebildet und mit aus dem Gehäuse ragender abgerundeter Kuppe versehen ist. Gemäß einer anderen vorteilhaften ·Ausführungsform der vorliegenden Erfindung ist der Haltestift mit einem aus dem Gehäuse herausragenden kugelförmigen Kopf versehen. Eine andere Version sieht einen Haltestift mit einem aus der Unterlage herausragenden kegelförmigen Kopf vor. Alle diese Ausführungsformen sind geeignet, um Werkstücke zwischen einem oder zwei festen Anschlägen und dem Haltestift zu verspannen.

Das Gehäuse des erfindungsgemäßen Seitendruckstückes, das zweckmäßig aus Metall gefertigt wird, ist zweckmäßig bündig in die Unterlage einzulassen, so daß lediglich der Haltestift aus der Öffnung der Unterlage herausragt.

Gemäß einer besonders vorteilhaften Ausführungsform der vorliegenden Erfindung ist der Haltestift über den Bund hinaus mit einer Verlängerung versehen, die eine Zentrierung für die üblicherweise spiralförmig ausgebildete Druckfeder darstellt.

Eine solche Zentrierung erweist sich insbesondere dann als sehr vorteilhaft, wenn die Druckfeder nicht genau dem Durchmesser des Gehäuses entspricht.

Zusätzlich kann auch am Boden des Gehäuses ein entsprechender Vorsprung angebracht sein, der ebenfalls der Zentrierung der Druckfeder dient und somit den gleichen vorstehend abgehandelten Zweck erfüllt.

Die erfindungsgemäßen Seitendruckstücke zeichnen sich gegenüber den bisher bekannten Seitendruckstücken zusätzlich noch dadurch aus, daß sie Druckkräfte nicht nur in zwei Richtungen, sondern in drei unterschiedlichen Richtungen auffangen oder übertragen können. Die für den Aufbau verwendeten Federmaterialien sind in den unterschiedlichsten Spezifikationen im Handel erhältlich, so daß die erfindungsgemäßen Druckstücke mit Standardmaterialien für alle denkbaren Anforderungen hergestellt werden können.

Anhand der in den anliegenden Zeichnungen dargestellten Ausführungsbeispiele wird nachfolgend die Erfindung im einzelnen näher erläutert.

In den Zeichnungen zeigt :

Fig. 1 eine Seitenansicht des erfindungsgemäßen Seitendruckstückes im Schnitt ;

Fig. 2 eine Seitenansicht einer anderen Ausführungsform des erfindungsgemäßen Seitendruckstückes im Schnitt, bei der die Federkraft mittels einer Stellschraube variierbar ist ;

Fig. 3 die Anordnung des erfindungsgemäßen Seitendruckstückes in einer Unterlage im Schnitt beim Festspannen eines Werkstückes.

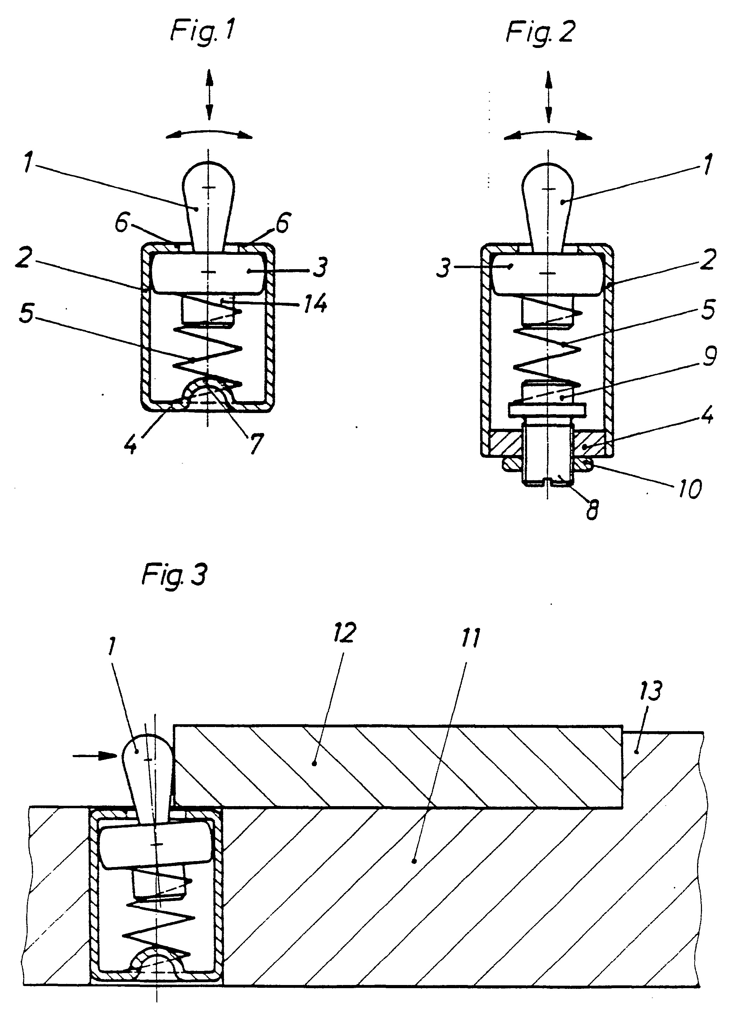

Das in Fig. 1 gezeigte erfindungsgemäße Seitendruckstück besteht aus einem teilweise in einem Gehäuse eingefaßten und damit in die Öffnung einer Unterlage einsetzbaren Haltestift 1, der mit einem an der Gehäusewand anliegenden Bund 3 versehen ist und von einer im Gehäuse zwischen Gehäuseboden 4 und Bund 3 angeordneten Druckfeder 5 mit seinem Bund 3 gegen den nach innen abgewinkelten Rand 6 des Gehäuses 2 gepreßt ist. Der Bund 3 des Haltestiftes 1 ist dabei mit einer teilkugelförmigen Außenfläche versehen, mit der er an der Gehäusewand anliegt. Diese teilkugelförmige Außenfläche gestattet bei der zylinderförmig ausgebildeten Gehäusewand ein Auslenken des Haltestiftes und ein gleichzeitiges Verkippen des Bundes, ohne daß der Bund seine Führung an der Gehäusewand verliert. Durch diese teilkugelförmige Außenfläche des Bundes wird somit eine sehr gleichmäßige Übertragung der Federkraft auf die Auslenkung des Haltestiftes aus seiner normalen Stellung erzielt.

Im Boden 4 des Gehäuses 2 ist eine nach innen gerichtete Aufwölbung 7 angeordnet, die zur Zentrierung der Druckfeder 5 dient. Den gleichen Zweck hat eine Verlängerung 14 des Haltestiftes 1 über den Bund 3 hinaus. Diese Verlängerung wird ebenfalls von der Druckfeder umschlossen und dient somit dazu, die Druckfeder in ihrer Position zu halten.

Bei der in Fig. 2 gezeigten Ausführungsform ist im Gehäuseboden 4 eine Stellschraube 8 in einer entsprechenden Gewindeöffnung verstellbar angeordnet. Diese Stellschraube 8 weist ein Auflager 9 für die Druckfeder 5 auf. Dieses Auflager kann durch Verdrehen der Stellschraube näher an den Bund 3 des Haltestiftes 1 bewegt werden, wodurch die Spannkraft der Druckfeder 5 erhöht wird.

Mittels einer Kontermutter 10 wird die Stellschraube 8 in ihrer gewünschten Stellung arretiert.

Fig. 3 zeigt das erfindungsgemäße Seitendruckstück im Schnitt, eingesetzt in einer Unterlage 11.

Das Werkstück 12 ist dabei zwischen einem Anschlag 13 und dem Haltestift 1 des erfindungsgemäßen Seitendruckstückes festgeklemmt und wird durch die Rückstellkraft des Haltestiftes 1 in dieser Position gehalten.

In den Figuren 1 und 2 sind die dreidimensionalen Bewegungsmöglichkeiten für den Kopf des Haltestiftes 1 durch Pfeile angezeigt.

Der Haltestift kann somit seitlich in allen Richtungen bewegt werden und er kann sich darüber hinaus auch in vertikaler Richtung entgegen der Kraft der Druckfeder 5 bewegen.

**Patentansprüche**

1. Seitendruckstück zur elastischen lateralen Klemmung eines Werkstücks (12) gegen einen oder mehrere an einer Unterlage (11) vorhandene Anschläge (13) bestehend aus einem an die Unterlage anbringbaren Gehäuse (2) und einen im Gehäuse befestigten und zwecks Anlage an dem Werkstück teilweise aus dem Gehäuse hinausragenden Haltestift (1), der in zwei lateralen Richtungen gegen elastische Mittel bewegbar ist, dadurch gekennzeichnet, daß der Haltestift (1) mit einem an der Gehäusewand (2) anliegenden Bund (3) versehen ist und von einer im Gehäuse zwischen Gehäuseboden (4) und Bund (3) angeordneten Druckfeder (5) mit seinem Bund (3) gegen den nach innen abgewinkelten Gehäuserand (6) gepreßt ist.

2. Seitendruckstück nach Anspruch 1, dadurch gekennzeichnet, daß der Bund (3) des Haltestiftes (1) mit einer teilkugelförmigen Außenfläche versehen ist.

3. Seitendruckstück nach Anspruch 1 oder Anspruch 2, dadurch gekennzeichnet, daß das Gehäuse (2) im Bereich des Bundes (3) teilhohlkugelförmig ausgebildet ist.

4. Seitendruckstück nach einem der Ansprüche 1 bis 3, dadurch gekennzeichnet, daß die Federkraft der Druckfeder (5) mittels eines Stellgliedes (8) veränderbar ist.

5. Seitendruckstück nach Anspruch 4, dadurch gekennzeichnet, daß die Federkraft der Druckfeder (5) mittels einer im Gehäuseboden (4) angeordneten, mit einem Anschlag (9) für die Druckfeder (5) versehenen Stellschraube (8) veränderbar ist.

6. Seitendruckstück nach einem der Ansprüche 1 bis 5, dadurch gekennzeichnet, daß der Haltestift (1) als Zylinderstift ausgebildet und mit aus dem Gehäuse (2) ragender abgerundeter Kuppe versehen ist.

7. Seitendruckstück nach Anspruch 6, dadurch gekennzeichnet, daß der Haltestift (1) mit einem aus dem Gehäuse (2) herausragenden kugelförmigen Kopf versehen ist.

8. Seitendruckstück nach einem der Ansprüche 1 bis 7, dadurch gekennzeichnet, daß das Gehäuse (2) bündig in eine Unterlage (11) eingelassen werden kann.

9. Seitendruckstück nach einem der Ansprüche 1 bis 8, dadurch gekennzeichnet, daß der Haltestift (1) über den Bund (3) hinaus mit einer Verlängerung (14) versehen ist, die eine Zentrierung für die spiralförmig ausgebildete Druckfeder (5) darstellt.

**Claims**

1. Lateral pressure pad for elastically laterally clamping a workpiece (12) against one or more stops (13) provided at a support (11), said lateral pressure pad consisting of a housing (2) attachable to the support and a retaining pin (1) fixed in the housing and partly projecting out of the housing to abut the working piece, the retaining pin (1) being movable in two lateral directions against elastical means, characterized in that the retaining pin (1) is provided with a flange (3) abutting the housing wall (2) and is pressed with its flange (3) by a compression spring (5) arranged in the housing between housing bottom (4) and flange (3) against the inwardly angled housing rim (6).

2. Lateral pressure pad according to claim 1, characterized in that the flange (3) of the retaining pin (1) is provided with a partial spherical-shaped external surface.

3. Lateral pressure pad according to claim 1 or claim 2, characterized in that the housing (2) is of partialhollow spherical-shaped construction in the region of the flange (3).

4. Lateral pressure pad according to anyone of claims 1 to 3, characterized in that the spring force of the compression spring (5) is variable by means of an adjusting element (8).

5. Lateral pressure pad according to claim 4, characterized in that the spring force of the compression spring (5) is variable by means of a set screw (8) arranged in the housing bottom (4) and provided with a stop (9) for the compression spring (5). ·

6. Lateral pressure pad according to anyone of claims 1 to 5, characterized in that the retaining pin (1) is constructed as a cylindrical pin and is provided with a rounded crest protruding out of the housing (2).

7. Lateral pressure pad according to claim 6, characterized in that the retaining pin (1) is provided with a spherical-shaped head protruding out of the housing (2).

8. Lateral pressure pad according to anyone of claims 1 to 7, characterized in that the housing (2) can be let flush into a support (11).

9. Lateral pressure pad according to anyone of claims 1 to 8, characterized in that the retaining pin (1) is provided beyond the flange (3) with a prolongation (14) which constitutes a centering means for the compression spring (5) which is of spiral-shaped construction.

**Revendications**

1. Presseur latéral pour la mise en serrage élastique d'une pièce à usiner (12) contre une ou plusieurs butées (13) d'une selle d'appui (11), comportant un boîtier (2) à monter sur la selle d'appui et un ergot de blocage (1), fixé dans le boîtier et sortant partiellement du boîtier . pour prendre appui sur la pièce à usiner, mobile dans deux directions latérales contre des corps élastiques, caractérisé en ce que l'ergot de blocage (1) est muni d'une collerette (3) en contact avec la paroi du boîtier (2) et est appuyé avec sa collerette (3) contre le bord (6), replié vers l'intérieur, du boîtier sous l'effet d'un ressort comprimé (5), disposé dans le boîtier entre le fond du boîtier (4) et la collerette (3).

2. Presseur latéral suivant la revendication 1, caractérisé en ce que la collerette (3) de l'ergot de blocage (1) a une surface extérieure partiellement de forme sphérique.

3. Presseur latéral suivant la revendication 1 ou la revendication 2, caractérisé en ce que le boîtier (2), dans la zone de la collerette (3), a, partiellement, une forme sphérique.

4. Presseur latéral suivant l'une quelconque des revendications 1 à 3, caractérisé en ce que la force du ressort comprimé (5) peut être changée au moyen d'un élément de réglage (8).

5. Presseur latéral suivant la revendication 4, caractérisé en ce que la force du ressort comprimé (5) peut être changée au moyen d'une vis de réglage (8) disposée dans le fond (4) du boîtier et munie d'une butée (9) pour le ressort comprimé (5).

6. Presseur latéral suivant l'une quelconque des revendications 1 à 5, caractérisé en ce que l'ergot de blocage (1) est constitué d'un ergot cylindrique et est muni d'une calotte arrondie dépassant du boîtier (2).

7. Presseur latéral suivant la revendication (6) caractérisé en ce que l'ergot de blocage (1) est muni d'une tête sphérique dépassant du boîtier (2).

8. Presseur latéral suivant l'une quelconque des revendications 1 à 7, caractérisé en ce que le boîtier (2) peut être encastré dans une selle d'appui (11).

9. Presseur latéral suivant l'une quelconque des revendications 1 à 8, caractérisé en ce que l'ergot de blocage (1) au delà de la collerette (3), est muni d'un prolongement (14) qui constitue un centrage pour le ressort comprimé (5) réalisé en spirale.

*Fig. 1*

*Fig. 2*

*Fig. 3*